# FASCICULE DE BREVET EUROPEEN

(11) **EP 2 106 364 B1**
(45) Date de publication et mention de la délivrance du brevet: **06.06.2012**
(21) Numéro de dépôt: 08750462.7
(22) Date de dépôt: 03.01.2008
(51) Int. Cl.: B64C 1/06, B64C 1/14

(54) **SECTION DE FUSELAGE POUR AERONEF ET AERONEF COMPRENANT UNE TELLE SECTION**
ABSCHNITT EINES FLUGZEUGRUMPFS UND FLUGZEUGRUMPF MIT EINEM SOLCHEN ABSCHNITT
SECTION OF AIRCRAFT FUSELAGE AND AIRCRAFT INCLUDING ONE SUCH SECTION

(30) Priorité: 05.01.2007 FR 0752537
(43) Date de publication de la demande: 07.10.2009
(73) Titulaire: AIRBUS OPERATIONS (S.A.S), 31060 Toulouse (FR)
(72) Inventeur: GALLANT, Guillaume, 31480 Lareole (FR); AGUERA, Damien, F-31400 Toulouse (FR); BERNADET, Philippe, F-31770 Colomiers (FR)
(74) Mandataire: Schmit, Christian Norbert Marie
(86) Numéro de dépôt international: PCT/FR2008/050006
(87) Numéro de publication internationale: WO 2008/096087

(56) Documents cités:
- DE-A1- 10 112 413
- DE-U1- 9 217 393
- US-A- 2 324 229
- US-A1- 2006 060 705

## Description

La présente invention concerne une section de fuselage pour aéronef et un aéronef comportant une telle section.

Il est connu que les avions commerciaux comportent un fuselage typiquement pseudo-cylindrique renforcé par des éléments raidisseurs tels que des lisses et des cadres de manière à résister aux contraintes mécaniques qui s'exercent en vol par exemple.

Dans les avions commerciaux par exemple, des ouvertures sont réalisées dans les parois latérales du fuselage pour accueillir des hublots et permettre aux passagers de voir directement l'environnement extérieur au fuselage.

Toutefois, ces hublots génèrent de nombreux inconvénients. Tout d'abord, un hublot d'avion doit assurer une isolation thermique et phonétique de l'espace intérieur du fuselage de l'extérieur afin d'assurer le confort des passagers. Il doit pareillement être étanche à l'air et à l'eau.

L'encadrement du hublot qui est typiquement riveté à la peau du fuselage, doit également résister aux contraintes mécaniques telles que les charges dues à la flexion du fuselage et la pressurisation qui est appliquée au hublot.

Le hublot doit enfin respecter le profil aérodynamique de l'avion.

Toutes ces contraintes ont conduit les constructeurs à un raidissement spécifique de la zone hublot.

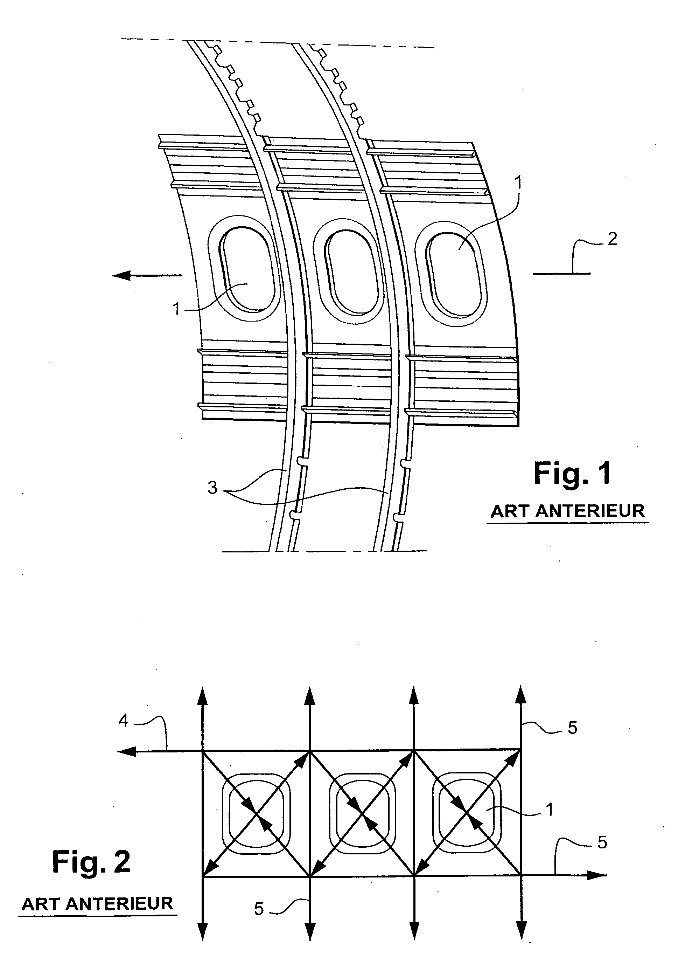

La Figure 1 est une vue partielle d'une section de fuselage d'un avion de l'art antérieur. Cette section comporte des hublots 1 qui sont espacés régulièrement en étant alignés le long d'un axe longitudinal 2 de la section de fuselage. Elle comporte également des cadres 3, encore appelés couples, qui permettent de renforcer mécaniquement la section de fuselage et de donner la forme de sa paroi. Le pas des cadres, c'est-à-dire la distance séparant deux cadres 3 successifs, est supérieur à la largeur des hublots 1. L'art antérieur est également illustré par le document US 2006/0060705.
La Figure 2 montre schématiquement les contraintes mécaniques auxquelles ces hublots 1 peuvent être soumis.

Ces contraintes mécaniques sont de deux types. Il s'agit de forces de cisaillement 4 liées à la flexion du fuselage et de forces de pressurisation 5 qui agissent transversalement et longitudinalement à la section de fuselage.

Toutes ces contraintes ont conduit les constructeurs à un raidissement spécifique de la zone hublot 1 avec des surépaisseurs de la paroi de fuselage au niveau de l'ouverture de hublot 1 et un encadrement pour garantir la tenue mécanique du hublot.

L'assemblage des hublots 1 dans les ouvertures de la paroi latérale de la section de fuselage est réalisé à l'aide de fixations mécaniques.

Toutefois, cet assemblage représente une tâche difficile pour les opérateurs et est consommateur de temps. Cet assemblage est donc coûteux en immobilisation de l'avion en cas de maintenance.

Par ailleurs, ces renforcements spécifiques de la paroi de fuselage représentent également un poids supplémentaire qui affecte de manière négative la consommation en kérosène de l'avion.

Il existe donc un besoin important pour réduire la masse spécifique du fuselage de l'avion tout en garantissant la tenue mécanique de la paroi du fuselage au niveau des hublots.

L'objectif de la présente invention est donc de proposer une section de fuselage pour aéronef simple dans sa conception et dans son mode opératoire, présentant une résistance mécanique très importante pour la construction d'un aéronef, tout en permettant de réduire la masse de la structure fuselage de cet aéronef.

Cette réduction de masse de la structure fuselage est d'autant plus importante que le motif de la maille hublot se répète de n'ombreuses fois sur ce dernier.

Un autre objet de la présente invention est une section de fuselage comprenant des hublots présentant des dimensions supérieures à celles rencontrées dans l'état de l'art.

A cet effet, l'invention concerne une section de fuselage pour aéronef comportant des cadres et des ouvertures pour recevoir des hublots.

Selon l'invention, au moins certains de ces cadres comportent chacun au moins un secteur de cadre entourant au moins une ouverture, ce secteur de cadre comprenant deux branches disposées latéralement à l'ouverture, les extrémités desdites branches étant accouplées de manière à former un Y à chacune des extrémités de ce secteur de cadre.

Deux supports de cadre successifs dans le sens longitudinal de la section de fuselage sont reliés entre eux par un voile de stabilisation.
Ce voile de stabilisation permet de définir un logement entre deux secteurs de cadre susceptible de recevoir un ou plusieurs éléments allongés tels que des câbles ou des tuyaux de conditionnement d'air.

Avantageusement, la présente invention est applicable à tout type de fuselage d'aéronef connu. A titre purement illustratif, la paroi latérale d'une section de fuselage pour avion à double pont, comprend pour chaque pont une rangée d'ouvertures destinées à recevoir des hublots, et des cadres. Au moins certains de ces cadres comportent chacun deux secteurs de cadre, i.e. un secteur de cadre par hublot et par pont.

La section de fuselage de la présente invention est particulièrement adaptée à un fuselage d'aéronef dans lequel la largeur des hublots est sensiblement aussi grande que, voire supérieure à, la distance séparant deux cadres successifs du fuselage.

Par ailleurs, un secteur de cadre peut entourer un hublot d'un seul tenant ou ayant plusieurs parties. Dans ce dernier cas, ces parties sont alors espacées par une ou plusieurs traverses. A titre illustratif, une traverse peut diviser un champ de vision en deux ouvertures ayant une forme triangulaire, semi-circulaire, ou autre.

Dans différents modes de réalisation particuliers de cette section de fuselage, chacun ayant ses avantages particuliers et susceptibles de nombreuses combinaisons techniques possibles:
- les branches du secteur de cadre forment un logement pour recevoir des moyens pour la fixation d'un hublot sur ladite ouverture,
Ces moyens pour la fixation d'un hublot comprennent de préférence un clip de maintien et des organes de solidarisation de ce clip sur l'encadrement du hublot. Ces organes de solidarisation comprennent, par exemple, des goujons, vis, boulons,...
- le secteur de cadre comprenant un hublot fixé à ladite ouverture par des moyens pour la fixation d'un hublot comprenant un clip de maintien, au moins une partie du pourtour de ce clip de maintien a une forme coopérant avec les branches du secteur de cadre pour la reprise d'efforts,
Le clip de maintien qui vient se monter sur l'encadrement du hublot, a ainsi de préférence une forme dont les contours latéraux peuvent épouser le pourtour intérieur de chaque branche de ce secteur de cadre pour reprendre les efforts d'ouverture et de déversements de celui-ci.
- ledit cadre comportant au moins deux portions de cadre, cette section de fuselage comprend des organes de fixation de ce secteur de cadre sur ces portions de cadre,
- ces organes de fixation comprennent des éclisses,
- le secteur de cadre est d'une construction en une seule pièce et en matériau composite,
Avantageusement, ces secteurs de cadre sont réalisés en matériau composite répondant aux critères de résistance mécanique et de résistance à la corrosion liés à des applications dans le domaine aéronautique.
Il s'agit, par exemple, d'un matériau composite à base de fibre de carbone et de résine, fabriqué au moyen d'un procédé d'injection ou d'estampage.
- ladite section de fuselage comporte une lisse placée entre l'ouverture et au moins une extrémité du secteur de cadre,

Enfin, l'invention concerne un aéronef ayant un fuselage dont les parois latérales comportent des hublots.

Selon l'invention, le fuselage comprend au moins une section de fuselage telle que décrite précédemment.

Avantageusement, la dimension transversale des hublots dudit aéronef est supérieure ou égale à la distance séparant deux cadres successifs du fuselage.

L'invention sera décrite plus en détail en référence aux dessins annexés dans lesquels:
- la figure 1 représente schématiquement une vue partielle d'une section de fuselage d'un avion de l'art antérieur;
- la figure 2 est une représentation schématique des contraintes mécaniques pouvant s'exercer en vol sur les hublots de la section de fuselage de la Figure 1;
- la figure 3 est une vue en perspective d'une section de fuselage pour aéronef selon un mode de réalisation particulier de l'invention;
- la figure 4 est une représentation schématique des contraintes mécaniques pouvant s'exercer sur les hublots de la section de fuselage de la Figure 3 ;
- la figure 5 représente schématiquement la section de fuselage de la figure 3 en vue de face;
- la figure 6 est une vue en coupe selon l'axe A-A de la section de fuselage de la figure 5;

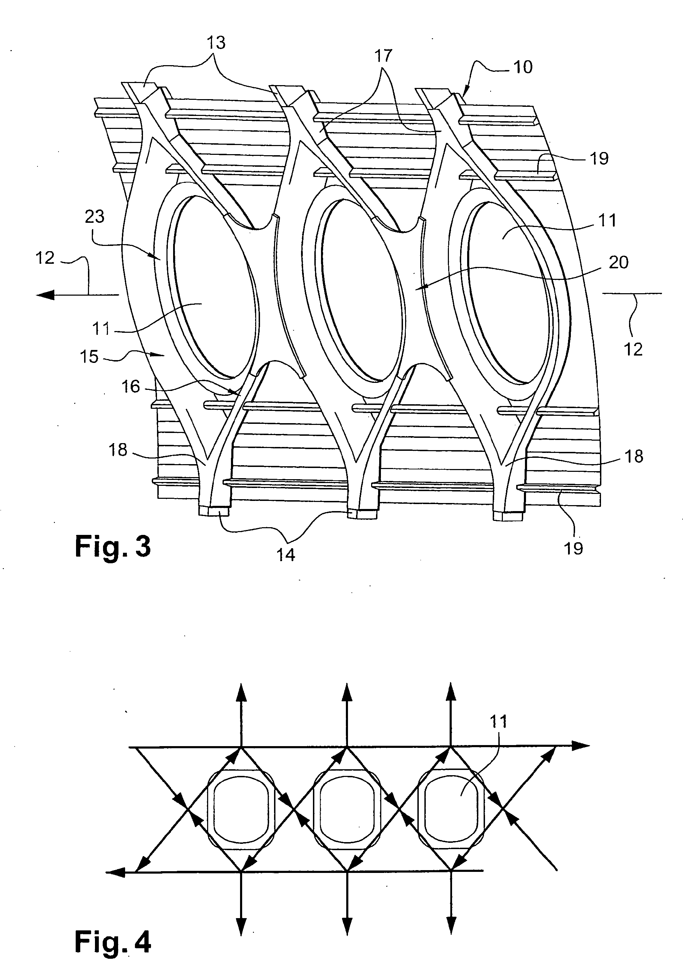

La Figure 3 montre une section de fuselage pour aéronef selon un mode de réalisation particulier de l'invention. La section de fuselage peut être une section de fuselage composite. A titre illustratif, cette section de fuselage peut être réalisée à base de fibres de carbone.

La section de fuselage comporte des cadres 10 et des hublots 11 montés sur des ouvertures. Ces hublots 11 sont alignés et régulièrement espacés le long de l'axe longitudinal 12 de la section de fuselage.

Chaque cadre 10 comporte deux portions de cadre 13, 14 reliées entre elles par un secteur de cadre entourant un hublots 11. Le secteur de cadre est solidarisé à ces portions de cadre 13, 14 par des organes de fixation. Ces derniers comprennent par exemple des éclisses qui assurent la connexion des secteurs de cadre aux cadres du pavillon et de la barque conférant ainsi une certaine souplesse dans le positionnement.

Ces éclisses peuvent être métalliques ou composites. A titre illustratif, elles sont en titane, en inconel ou en alliage d'aluminium lorsqu'elles sont métalliques. Il peut s'agir alternativement de composites thermoplastiques.

Le hublot 11 comporte de manière connue un élément transparent externe, au moins un élément transparent interne et un encadrement de hublot.

L'élément transparent interne de ce hublot présente, de préférence, une forme elliptique. Avantageusement, les dimensions de l'élément transparent interne du hublot sont de l'ordre de 520 x 299 mm offrant ainsi un champ de vision plus important pour le passager que les hublots connus de l'art antérieur.

Bien entendu, le hublot 11 peut avoir tout autre forme choisie dans le groupe comprenant une forme triangulaire, circulaire, rectangulaire, ou autre.

Chaque secteur de cadre comprend deux branches 15, 16 disposées latéralement au hublot 11 et dont les extrémités sont accouplées de manière à former un Y à chacune des extrémités 17, 18 du secteur de cadre.

Les branches 15, 16 présentent ainsi dans leur partie centrale une forme bombée de sorte que le secteur de cadre présente une forme sensiblement elliptique.

Chaque hublot 11 est sensiblement centré sur son secteur de cadre correspondant, un espace séparant les branches latérales 15, 16 du secteur de cadre du pourtour du hublot 11.

Les éléments raidisseurs de la section de fuselage comprennent en plus des cadres 10, des lisses 19. La section de fuselage comprend une lisse 19 placée entre le hublot 11 et chaque extrémité 17, 18 du secteur de cadre. Cette lisse 19 disposée tangentiellement au hublot 11 permet de border à ses extrémités supérieures et inférieures l'ouverture de la paroi latérale du fuselage recevant le hublot 11. Par ailleurs, le raidissement hors plan de la section de fuselage de l'invention est ainsi réduit au minimum.

La Figure 4 montre de manière schématique le résultat d'une simulation des contraintes s'exerçant sur la section de fuselage au niveau des hublots 11.

On observe que les secteurs de cadres de l'invention drainent avantageusement le flux lié à la pressurisation en Y autour des hublots. En comparant les figures 2 et 4, on observe que les hublots 11 ne sont ainsi plus soumis directement aux contraintes résultant de la pressurisation contrairement à l'état de l'art. Le passage des contraintes de la zone inférieure vers la zone supérieure de la section de fuselage permet d'augmenter la taille des hublots.

De plus, les secteurs de cadre sont orientés selon la diagonale de la maille inter-hublots ce qui permet aux secteurs de cadre de reprendre le cisaillement du bandeau hublot (cas de rafale verticale).

Un voile de stabilisation 20 est placé entre deux supports de cadre successifs dans le sens longitudinal 12 de la section de fuselage. Ces voiles 20 permettent de stabiliser les secteurs de cadre et de reprendre les efforts d'ouverture.

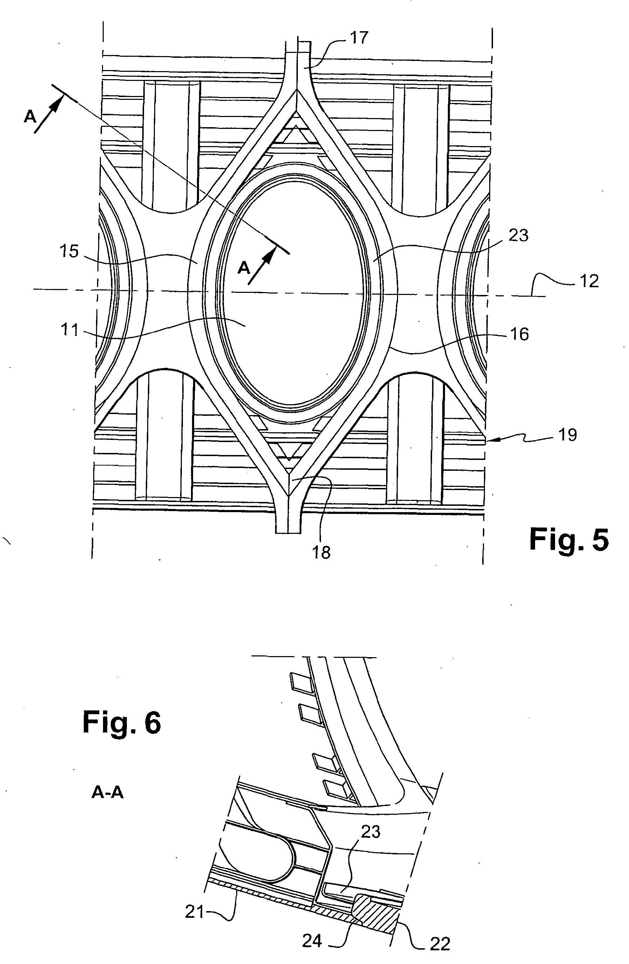

La Figure 6 montre une vue partielle en coupe selon l'axe A-A de la section de fuselage de la Figure 5. Les éléments portant les mêmes références que les éléments de la Figure 3 représentent les mêmes objets, lesquels ne seront pas décrits à nouveau ci-dessous.

La paroi latérale 21 de la section de fuselage comprend une ouverture sur laquelle est montée un hublot 11. Ce hublot 11 comporte un élément transparent externe 22 et au moins un élément transparent interne (non représenté). Un joint souple permet d'assembler l'élément transparent externe 22 et l'élément transparent interne en les maintenant séparés l'un et l'autre par un espace intercalaire. Ce joint est, par exemple, réalisé en élastomère.

La paroi latérale 21 de la section de fuselage présente un chanfrein 24 le long du pourtour de l'ouverture, ce chanfrein 24 présentant une forme sensiblement similaire à celle d'un bord de l'élément transparent externe 22 de manière à bloquer latéralement et longitudinalement l'élément transparent externe 22 dans cette ouverture. La surface la plus externe de l'élément transparent 22 a une forme assurant une continuité aérodynamique avec la paroi latérale du fuselage de l'avion.

Le hublot 11 est fixé de manière conventionnelle sur l'ouverture au moyen d'un clip de maintien 23 qui vient se monter sur l'encadrement du hublot 11 au moyen d'écrous et de goujons.

La coopération des voiles de stabilisation 20 et des clips de maintien 23 avec les secteurs de cadre permet de stabiliser ceux-ci.

## Revendications

1. Section de fuselage pour aéronef, ladite section comportant des cadres et des ouvertures pour recevoir des hublots (11), au moins certains desdits cadres (10) comportant chacun au moins un secteur de cadre entourant au moins une desdites ouvertures, ledit secteur de cadre comprenant deux branches (15, 16) disposées latéralement à ladite ouverture, les extrémités desdites branches (15, 16) étant accouplées de manière à former un Y à chacune des extrémités (17,18) dudit secteur de cadre, **caractérisée en ce que**
- deux desdits secteurs de cadre successifs dans le sens longitudinal de ladite section sont reliés entre eux par un voile de stabilisation (20).

2. Section selon la revendication 1, **caractérisée en ce que** ladite ouverture est sensiblement centrée sur ledit secteur de cadre.

3. Section selon la revendication 1 ou 2, **caractérisée en ce que** ledit secteur de cadre a une forme sensiblement elliptique.

4. Section selon l'une quelconque des revendications 1 à 3, **caractérisée en ce que** lesdites branches (15, 16) dudit secteur de cadre forment un logement pour recevoir des moyens pour la fixation d'un hublot (11) sur ladite ouverture.

5. Section selon la revendication 4, **caractérisée en ce que** ledit secteur de cadre comprenant un hublot (11) fixé à ladite ouverture par des moyens pour la fixation d'un hublot (11) comprenant un clip de maintien (21), au moins une partie du pourtour dudit clip de maintien (21) a une forme coopérant avec lesdites branches (15, 16) du secteur de cadre pour la reprise d'efforts.

6. Section selon l'une quelconque des revendications 1 à 5, **caractérisée en ce que** ladite ouverture a une forme choisie dans le groupe comprenant une forme elliptique, forme rectangulaire, forme triangulaire

7. Section selon l'une quelconque des revendications 1 à 6, **caractérisée en ce que** ledit cadre comportant au moins deux portions de cadre (13, 14), ladite section comprend des organes de fixation dudit secteur de cadre sur lesdites portions de cadre.

8. Section selon la revendication 7, **caractérisée en ce que** lesdits organes de fixation comprennent des éclisses.

9. Section selon l'une quelconque des revendications 1 à 8, **caractérisée en ce que** ledit secteur de cadre est d'une construction en une seule pièce et en matériau composite.

10. Section selon l'une quelconque des revendications 1 à 9, **caractérisée en ce qu'**elle comprend une lisse (19) placée entre ladite ouverture et au moins une extrémité (17, 18) dudit secteur de cadre.

11. Aéronef ayant un fuselage dont les parois latérales comportent des hublots, **caractérisé en ce que** ledit fuselage comprend au moins une section de fuselage selon l'une quelconque des revendications 1 à 10.

12. Aéronef selon la revendication 11, **caractérisé en ce que** la dimension transversale des hublots (11) est supérieure ou égale à la distance séparant deux cadres successifs du fuselage.

## Claims

1. A section of fuselage for an aircraft, said section comprising frames and openings for receiving cabin windows (11), at least some of said frames (10) each comprising at least one frame segment that surrounds at least one of said openings, said frame segment comprising two branches (15, 16) that are disposed to the sides of said openings, the ends of said branches (15, 16) being attached to each of the ends (17, 18) of said frame segment so as to form a Y, **characterised in that**
- two of said frame segments, successive along the longitudinal direction of said section, are connected to each other by a stabilisation wall (20).

2. A section according to claim 1, **characterised in that** said opening is substantially centred on said frame segment.

3. A section according to claim 1 or 2, **characterised in that** said frame segment is substantially elliptical in shape.

4. A section according to any one of claims 1 to 3, **characterised in that** said branches (15, 16) of said frame segment form a housing to accommodate means for mounting a cabin window (11) onto said opening.

5. A section according to claim 4 **characterised in that**, with said frame segment comprising a cabin window (11) attached to said opening by means for securing a cabin window (11) comprising a retaining clip (21), at least one part of the perimeter of said retaining clip (21) has a shape complementing that of said branches (15, 16) of the frame segment for transferring forces.

6. A section according to any one of claims 1 to 5, **characterised in that** said opening has a shape chosen from the group containing an elliptical shape, a rectangular shape and a triangular shape.

7. A section according to any one of claims 1 to 6 **characterised in that**, with said frame comprising at least two frame portions (13, 14), said section comprises fixing members for securing said frame segment onto said frame portions.

8. A section according to claim 7, **characterised in that** said fixing members comprise splice plates.

9. A section according to any one of claims 1 to 8, **characterised in that** said frame segment is made as a single part and made from composite material.

10. A section according to any one of claims 1 to 9, **characterised in that** it comprises a stringer (19) placed between said opening and at least one end (17, 18) of said frame segment.

11. An aircraft having a fuselage, the lateral walls of which comprise cabin windows, **characterised in that** said fuselage comprises at least one section of fuselage according to any one of claims 1 to 10.

12. An aircraft according to claim 11, **characterised in that** the transversal dimension of the cabin windows (11) is more than or equal to the distance separating two successive frames of the fuselage.

## Patentansprüche

1. Rumpfabschnitt für ein Luftfahrzeug, wobei der besagte Abschnitt Rahmen und Öffnungen zur Aufnahme von Fenstern (11) umfasst, und zumindest bestimmte der besagten Rahmen (10) jeweils zumindest einen Rahmenabschnitt umfassen, der zumindest eine der besagten Öffnungen umschließt, und der besagte Rahmenabschnitt zwei Äste (15, 16) umfasst, die seitlich der besagten Öffnung angeordnet sind, und die Enden der besagten Äste (15, 16) so gekoppelt sind, dass sie an jedem der Enden (17, 18) des besagten Rahmenabschnitts ein Y bilden, **dadurch gekennzeichnet, dass**
- zwei der besagten aufeinanderfolgenden Rahmen in der Längsrichtung des besagten Abschnitts durch eine Stabilisierungswandung (20) miteinander verbunden sind.

2. Abschnitt nach Anspruch 1, **dadurch gekennzeichnet, dass** die besagte Öffnung in etwa mittig auf dem besagten Rahmenabschnitt liegt.

3. Abschnitt nach Anspruch 1 oder 2, **dadurch gekennzeichnet, dass** der besagte Rahmenabschnitt eine in etwa elliptische Form aufweist.

4. Abschnitt nach irgendeinem der Ansprüche 1 bis 3, **dadurch gekennzeichnet, dass** die besagten Äste (15, 16) des besagten Rahmenabschnitts eine Aufnahme zum Anbringen der Vorrichtungen zur Befestigung eines Fensters (11) in der besagten Öffnung bilden.

5. Abschnitt nach Anspruch 4, **dadurch gekennzeichnet, dass** der besagte Rahmenabschnitt umfassend ein Fenster (11), das durch Vorrichtungen zur Befestigung eines Fensters (11) in der besagten Öffnung befestigt ist, einen Halteclip (21) umfasst, wobei zumindest ein Teil des Umfanges des besagten Halteclips (21) eine Form aufweist, die zur Kraftrückgewinnung mit den besagten Ästen (15, 16) des Rahmenabschnittes zusammenwirkt.

6. Abschnitt nach irgendeinem der Ansprüche 1 bis 5, **dadurch gekennzeichnet, dass** die besagte Öffnung eine Form aufweist, die aus der Gruppe ausgewählt wird, die eine elliptische, rechteckige, dreieckige Form umfasst.

7. Abschnitt nach irgendeinem der Ansprüche 1 bis 6, **dadurch gekennzeichnet, dass**, da der besagte Rahmen zumindest zwei Rahmenteile (13, 14) umfasst, der besagte Abschnitt Vorrichtungen zur Befestigung des besagten Rahmenabschnitts auf den besagten Rahmenteilen umfasst.

8. Abschnitt nach Anspruch 7, **dadurch gekennzeichnet, dass** die besagten Befestigungsvorrichtungen Laschen umfassen.

9. Abschnitt nach irgendeinem der Ansprüche 1 bis 8, **dadurch gekennzeichnet, dass** der besagte Rahmenabschnitt in einem Stück und aus einem Verbundmaterial gefertigt ist.

10. Abschnitt nach irgendeinem der Ansprüche 1 bis 9, **dadurch gekennzeichnet, dass** er eine Leiste (19) umfasst, die zwischen der besagten Öffnung und zumindest einem Ende (17, 18) des besagten Rahmenabschnittes angeordnet ist.

11. Luftfahrzeug mit einem Rumpf, dessen Seitenwände Fenster umfassen, **dadurch gekennzeichnet, dass** der besagte Rumpf zumindest einen Rumpfabschnitt nach irgendeinem der Ansprüche 1 bis 10 umfasst.

12. Luftfahrzeug nach Anspruch 11, **dadurch gekennzeichnet, dass** die Querabmessung des Fensters (11) größer oder gleich dem Abstand ist, der zwei aufeinanderfolgende Rahmen des Rumpfes trennt.
